# EUROPEAN PATENT APPLICATION

(11) **EP 4 427 587 A1**
(43) Date of publication of application: **11.09.2024**
(21) Application number: 23160404.2
(22) Date of filing: 07.03.2023
(51) Int. Cl.: A01M 7/00, B60R 3/00, A01M 9/00

(54) **AGRICULTURAL SPRAYER HAVING AN OPERATOR PLATFORM AND A SELF-CLOSING DOOR**

(71) Applicant: Kverneland Group Nieuw-Vennep B.V., 2153 LR Nieuw-Vennep (NL)
(72) Inventor: PRINS, Kevin, 2153 LR Nieuw-Vennep (NL)
(74) Representative: Bittner, Thomas L.

(57) **Abstract**

The disclosure of this application refers to an agricultural sprayer (1). The agricultural sprayer (1) comprises an operator platform (2) for an operator to stand on, an entrance (3) through which the operator can enter the operator platform (2), and a self-closing door (4), which is pivotable between a closed position and an open position. In the closed position, the door (4) closes the entrance (3) to the operator platform (2). In the open position, the operator can enter the operator platform (2) through the entrance (3). The door (4) comprises a self-closing mechanism (5), which is configured to, when the door (4) is in the open position, automatically return the door (4) into the closed position when released.

## Description

The present disclosure refers to an an agricultural sprayer having an operator platform and a self-closing door.

### Background

Agricultural sprayers are used for applying a liquid to a crop and / or the ground. The liquid usually comprises an herbicide, a fertilizer and / or a pesticide. Hereby, the herbicide, fertilizer and / or pesticide (active ingredients) are typically mixed with a carrier liquid (such as water).

Agricultural sprayers can be trailed as an implement or self-propelled. They typically comprise a tank for storing the liquid to be sprayed, a sprayer pump (common sprayer pump types include diaphragm, centrifugal, and roller pumps.), a boom assembly, and a plurality of nozzles carried by the boom assembly at spaced locations, which nozzles are configured to spray the liquid. The boom assembly usually comprises a pair of wing booms that extend to either side of the sprayer. The wing booms are usually foldable between an operating position and a transport position. A self-propelled agricultural sprayer typically comprises an onboard propulsion system, for example, a diesel engine or an electric motor, providing motive force and other power such as hydraulic power, electrical power, etc.

Agricultural sprayers can have a platform that enables an operator to inspect and / or maintain parts of the agricultural sprayer, such as the level of liquid in the tank, proper operation of the parts of the agricultural sprayer, etc. The platform is usually elevated. Since agricultural sprayers typically have high ground clearance, many of the parts to be inspected or maintained are elevated as well. An elevated platform improves the accessibility to these parts. An elevated platform also improves the operator's visibility while operating the agricultural sprayer.

Document US 11 332 076 B2 discloses an agricultural sprayer with a platform. Further, this document discloses a ladder system with a first rail, a second rail parallel to the first rail, a ladder bracket supported by and configured to slide along the first rail and the second rail, a ladder coupled to the ladder bracket and configured to rotate with respect to the ladder bracket between a lowered position and a storage position, and an air spring coupling the ladder to the ladder bracket and configured to apply a force to the ladder when the ladder is in the lowered position to keep the ladder in the lowered position. The ladder system is provided so that an operator can climb up to the platform.

Document US 8 033 482 B2 refers to an agricultural implement having a frame and at least one wing boom pivotably coupled to the frame. The wing boom is designed to extend generally perpendicularly from the frame when in a working position and generally adjacent the frame when in a transport or stowed position. The outer end of the wing boom rests in a cradle coupled to the frame. The frame further includes a handrail that may be pivoted toward the frame to provide clearance for the cradle when the wing boom is moved to the stowed position.

In document CN 202 731 612 U, a safety door is provided. The safety door comprises a door body, a door frame, and a rotation shaft, wherein the door body and the door frame are connected through the rotation shaft, and the door body can rotate around a shaft line of the rotation shaft. When the safety door is closed, the door body is perpendicular to a horizontal plane, and the rotation shaft is arranged inclined relative to the longitudinal direction, and the door body can be automatically closed after being opened under the action of gravity.

### Summary

It is an object of the present disclosure to provide improved technology for providing an operator platform on an agricultural sprayer.

For solving the problem, an agricultural sprayer having an operator platform and a self-closing door according to the independent claim 1 is provided. Further embodiments are disclosed in dependent claims.

According to one aspect, an agricultural sprayer is provided. The agricultural sprayer comprises an operator platform for an operator to stand on, an entrance through which the operator can enter the operator platform, and a self-closing door, which is pivotable between a closed position and an open position. In the closed position, the door closes the entrance to the operator platform. In the open position, the operator can enter the operator platform through the entrance. The door comprises a self-closing mechanism, which is configured to, when the door is in the open position, automatically return the door into the closed position when released.

The agricultural sprayer can be trailed (as an implement) or self-propelled (with own drive). Alternatively or in addition, the agricultural sprayer can operate autonomously. In the above context, an automatic return can mean that the return takes place without external influences (by itself) upon releasing the door in the open position. The self-closing mechanism can be an active self-closing mechanism and / or a passive self-closing mechanism. The active mechanism can perform the automatic return of the door into the closed position by means of an external power supply. The passive mechanism can perform the automatic return of the door into the closed position by means of energy that has been stored as a result of pivoting the door into the open position. The active mechanism can comprise a motor, e.g., an electric motor, a pneumatic actuator, and / or a hydraulic actuator, and an external power supply. The door may be pivotable about a pivot axis. The pivot axis may be essentially vertical.

The operator platform can define an inside space. In particular, the space above the operator platform where the operator can stay can define the inside space. The space outside this inside space can define the outside. Through the entrance, the operator can enter the inside space when coming from the outside. If the door is in the closed position, the door may close the entrance to the inside space. If the door is in the open position, the operator can enter the inside space through the entrance. The open position can be a position in which the door is fully / maximally opened. The closed position can be a position in which the door is fully / maximally closed. The entrance may be the area covered by the door when the door is in the closed position. The entrance may be a doorway of the door. It is noted that, if the door is bypassed, the operator may possibly reach the operator platform without opening the door. However, in this case, the operator would not reach the operator platform via the door, the doorway and / or the entrance. Alternatively, the door, the doorway and / or the entrance may be the only way to reach the operator platform / inside space.

The operator platform can be arranged at the rear or front of the sprayer. The orientation of the front and rear can be based on the traveling direction of the sprayer during operation.

The self-closing mechanism may be adapted for storing energy when the door is pivoted into the open position and for releasing the energy stored in the self-closing mechanism when the door is released so as to automatically return the door into the closed position.

This self-closing mechanism can be considered as a passive mechanism. The self-closing mechanism can be a swing back mechanism for self-closing the door. The self-closing mechanism can comprise a spring element. The energy can be stored in the spring element (in form of potential energy, especially tension energy / elastic potential energy), for example, by loading the spring element through pivoting the door into the open position. The spring element can absorb / store potential energy (tension energy / elastic potential energy) and convert it into kinetic energy of the door when the door is released from the open position. The spring element can have two attachment points, one being connected to a pivoting part of the door, and one being connected to a part of the sprayer that is stationary with respect to the pivoting part of the door. In the closed position of the door, the spring element can be relaxed or preloaded. In the open position of the door, the spring element can be loaded. The spring element can comprise at least one of the following: tension spring, compression spring, torsion spring, metal spring, coil spring, leaf spring, rubber spring, and gas spring.

The self-closing mechanism can comprise a gravitational element. The energy can be stored in the gravitational element (in form of potential energy, especially gravitational potential energy). The gravitational element can absorb / store potential energy (gravitational potential energy) and convert it into kinetic energy of the door when the door is released from the open position. When the door is opened, for example, a cable (or a similar element, e.g., a chain) attached to the pivoting part of the door can be configured to lift a weight that automatically returns the door into the closed position when the door is released.

Alternatively or in addition, the self-closing mechanism can be realized due to the arrangement of the pivot axis of the door. The pivot axis of the door can be configured so that the gravitational center of the door is lifted upon pivoting the door into the open position. Thus, the gravitational element can be the door itself. For example, the pivot axis can be arranged essentially horizontally, wherein the door can be designed as a wing door. Alternatively, the pivot axis of the door can be inclined with respect to a horizontal axis, e.g., by a certain angle of inclination. The angle of inclination can be between 1 and 45 degrees, preferably between 1 and 25 degrees, more preferably between 1 and 10 degrees. Preferably, the pivot axis is inclined in the closing direction of the door. The inclination can be parallel to the tangential movement of the door starting from the closed position.

The agricultural sprayer may further comprise an operator entrance platform for an operator to stand on, which operator entrance platform is arranged adjacent to the operator platform, wherein the operator platform and the operator entrance platform are separated by the door.

The operator entrance platform may contact the operator platform. The operator entrance platform and the operator platform may be contiguous. Alternatively, the operator entrance platform and the operator platform may be spaced apart from each other. The operator entrance platform and the operator platform may be integrally molded / formed in one piece. The operator entrance platform may be outside, in particular, with respect to the door. The operator platform may be inside with respect to the door. The operator entrance platform and / or the operator platform may be flat (two-dimensional). The operator entrance platform and the operator platform may be arranged on the same level. The operator entrance platform and the operator platform may be overlap-free.

The operator entrance platform may be configured that the operator can open the door while standing on the operator entrance platform. Thus, the operator does not have to open the door from the ground or from a possible ladder.

The agricultural sprayer can comprise a railing. The railing can at least partially surround the operator platform. The railing can comprise the door such that a passageway through the railing is provided.

The railing can be a railing of the operator platform. The door can be accommodated by the railing. The railing may be configured to prevent the operator from falling off the operator platform. The railing can be arranged along the circumferential boundary of the operator platform. The railing may surround the operator platform completely. At least one side of the operator platform can be free of the railing. The side(s) of the operator platform that is (are) free of the railing can be bordered by other parts of the agricultural sprayer, for example, the tank. The operator platform may be entirely bordered by the railing, the door and / or other parts of the agricultural sprayer, especially in such a way that the operator is prevented from falling off the operator platform. At least parts of the railing can be made out of pipes. At least parts of the door can be made out of pipes. The pipes of the railing and the pipes of the door can be of the same type (in particular, of the same diameter and / or the same material). The railing may extend along the boundary of the platform. The shape of the door comprised or accommodated by the railing may be such that it exposes an area of a one-piece platform consisting of the operator platform and the operator entrance platform such that the exposed area is not enclosed by the railing. The portion of the one-piece platform within the railing may define the operator platform and the portion of the one-piece platform outside the railing may define the operator entrance platform.

The door may comprise a pivoting mechanism, which allows the door to be pivotable about the pivot axis. The pivoting mechanism may comprise at least one hinge. The pivoting mechanism may be attached to the railing. The pivoting mechanism may be attached to the railing by screws, by rivets, and / or via welding. The upper edge of the door may be aligned with the upper edge of the railing.

The operator entrance platform may be at least partially free of a railing.

The operator entrance platform can have (exactly) two sides, wherein a first side is in contact with the operator platform and wherein a second side is free from connection / contact with the operator platform. The second side may be free of a railing. The first side may be bordered by a railing of the operator entrance platform. The railing of the operator platform, i.e., the railing that borders the operator platform, can form the railing of the operator entrance platform, i.e., the railing that borders the operator entrance platform, or at least parts thereof. In particular, the closed door can form a significant part of the railing of the operator entrance platform. Via the side of the operator entrance platform that is free of a railing, the operator can reach the operator entrance platform.

The side of the operator entrance platform that is free of a railing can be located opposite the door. Alternatively, the side of the operator entrance platform that is free of a railing can be located adjacent to the door.

The agricultural sprayer may further comprise a ladder for reaching the operator platform.

The ladder can be configured to reach the operator entrance platform. The ladder can be configured to reach the operator platform through the operator entrance platform via the ladder. The ladder can be arranged adjacent to the operator platform. Alternatively, the ladder can be arranged adjacent to the operator entrance platform. In particular, the ladder can be arranged adjacent to the side of the operator entrance platform that is free of a railing, for example, the second side of the operator entrance platform. The ladder can be different from the door.

The ladder can be movable between a use position and a transport position, wherein, in the use position, the operator can reach the operator platform via the ladder.

In the use position, the operator can reach the operator entrance platform via the ladder. In the use position, the operator can reach the operator platform through the operator entrance platform via the ladder. In the transport position, the ladder may not be usable by the operator. In the use position, a first end of the ladder may be located adjacent the operator platform or the operator entrance platform, in particular, the side of the operator entrance platform that is free of a railing, for example, the second side of the operator entrance platform, and a second end of the ladder may be located at the ground or close to the ground such that the operator can reach a first step / rung of the ladder.

The ladder can be pivotable between the use position and the transport position. A pivot axis of the ladder can be located at one end of the ladder. The ladder can be foldable between the use position and the transport position. A pivot axis of the ladder can be located essentially in the middle of the ladder so that the ladder is foldable in itself. The ladder may be retractable, for example, in a telescopic manner, such that a contracted state defines the transport position, and an extracted state defines the use position.

At least one part of the ladder, for example, the pivot axis of the ladder and / or the upper end (first end) of the ladder, may be stationary.

The ladder may, in the transport position, form a boundary on the side of the operator entrance platform that is free of the railing.

For example, the ladder may, in the transport position, form a boundary on the second side of the operator entrance platform.

The door may comprise a distal part and a proximal part with respect to a pivot axis, the pivot axis being the axis about which the door is pivotable. The distal part may be angled with respect to the proximal part.

The distal part may be or may comprise a U-shaped part. The U-shaped part of the distal part may consist of pipe-like elements. The distal part may be angled with respect to the proximal part along a kink axis. The kink axis may be parallel to the pivot axis of the door. Alternatively or in addition, the kink axis may be horizontal. The angle between the distal part and the proximal part can be between 5 and 90 degrees, preferably between 10 and 90 degrees, more preferably between 45 and 90 degrees, more preferably 90 degrees. The proximal part may comprise a U-shaped part and optionally additionally the pivoting mechanism. The U-shaped part of the proximal part may consist of pipe-like elements. The U-shaped part of the distal part and the U-shaped part of the proximal part can form an O-shaped part. The U-shaped part of the distal part and the U-shaped part of the proximal part can be integrally molded / formed in one piece. In a top view, the door may be L-shaped. Further, in a top view, the door, if located in the closed position, may (substantially) follow the contour of the operator platform, follow the contour of the operator entrance platform and / or follow the contour formed by the contact between the operator platform and the operator entrance platform.

The door can be concave, especially when viewed from above. On the inside of the concave door, the operator entrance platform can be arranged. On the outside of the concave door, the operator platform can be arranged. The concave shape of the door comprised by the railing, with the outside of the concave door facing the operator platform, exposes an area outside the railing that can form the operator entrance platform.

The door may comprise a first stop mechanism that limits the pivoting of the door in the opening direction. Alternatively or in addition, the door may comprise a second stop mechanism that limits the pivoting of the door in the closing direction.

In other words, the pivot mechanism may have two integrated stops: one stop when the door opens and another stop when the door swings back to the closed position.

The first stop mechanism may prevent the door from pivoting further than a maximum opening angle of the door in the opening direction. When the maximum opening angle is present, the door can be in the open position. The maximum opening angle can be between 45 and 135 degrees, preferably between 60 and 120 degrees, more preferably between 80 and 100 degrees, more preferably 90 degrees.

The second stop mechanism may prevent the door from pivoting further than into the closed position in the closing direction.

The first and / or second stop mechanism can be a hard or soft stop mechanism. The hard stop mechanism can comprise an inelastic stopper. The soft stop mechanism can comprise an elastic stopper. The hard stop mechanism can be / have a metal stopper. The soft stop mechanism can be / have a rubber stopper. With the soft stop mechanism, the respective outer positions of the door (closed position and door having the maximum opening angle) can be exceeded temporarily due to a spring effect of the soft stop mechanism.

In the closed position of the door, the self-closing mechanism may be configured to press the door against the second stop mechanism with a certain closing force. This closing force may be greater than forces usually experienced by the door during operation of the sprayer. In this way, a rattling of the door can be prevented.

The first and / or second stop mechanism can be comprised by the pivoting mechanism. In particular, the first and / or second stop mechanism can be comprised by the hinge of the pivoting mechanism. The self-closing mechanism, in particular, the spring element, e.g., the rubber spring, can be comprised by the pivoting mechanism. The self-closing mechanism can be arranged between two parts of the hinge element, which two parts are pivotable relative to each other (when the door is pivoted). A first end of the self-closing mechanism can be attached to a first part of the two parts of the hinge element and a second end of the self-closing mechanism can be attached to a second part of the two parts of the hinge element.

The door may be free of a locking mechanism.

In this respect, the locking mechanism can be a mechanism that is configured to prevent the door from (any) pivoting. In particular, the locking mechanism can be configured to (completely) prevent the door from pivoting in the opening and from pivoting in the closing direction. The locking mechanism may fix the distal part of the door, especially with respect the railing. The locking mechanism may firmly connect the distal part of the door with a stationary part of the sprayer, e.g., the railing. The door may be free of a locking mechanism in the open position and / or in the closed position.

The distal part of the door may be freestanding in the closed position and / or in the open position (of the door).

In the closed position and / or in the open position of the door, the distal part of the door may be free of contacting points with other parts, in particular, with other parts of the agricultural sprayer. The door may consist of the distal part and the proximal part. The distal part of the door may form a major part of the door, e.g., at least 30 or 50 % of the door. The distal part may be longer than the proximal part of the door. The distal part of the door may be free of contacting points with other parts, in particular, with other parts of the agricultural sprayer, in any possible position of the door and / or in any position of the door between the closed position and the open position of the door.

The door may open towards the operator platform.

The door may pivot from the closed position to the open position in the direction of the operator platform. When opening, the door may pivot to the inside. Alternatively, the door may open away from the operator platform. The door may open towards the operator entrance platform. The door may pivot from the closed position to the open position in the direction away of the operator platform, especially in the direction of the operator entrance platform. When opening, the door may pivot to the outside.

The door may be provided with a soft-close mechanism configured to limit the speed of returning the door into the closed position at least for a final portion of the returning. The soft-close mechanism may be a soft-close mechanism for doors as they are known as such. The soft-close mechanism may be provided with a dampener that dampens the returning movement into the closed position of the door. Alternatively or additionally, the soft-close mechanism may comprise a spring mechanism counteracting the returning movement. In the case of an active self-closing mechanism, the soft-close mechanism may alternatively or additionally be realized as a control feature of the active self-closing mechanism. For example, a motor providing the active self-closing mechanism may be controlled to limit the speed of the returning movement at least for the final portion of the returning.

The operator platform may have at least twice the area of the operator entrance platform.

The operator platform may have at least 2.5x, 3x, 4x, or 5x the area of the operator entrance platform. The operator entrance platform can be just large enough for an average person to stand on (comfortably). The operator entrance platform can have at least 0.1 m², preferably at least 0.2 m², more preferably at least 0.5 m². The operator platform can have at least 0.2 m², preferably at least 0.4 m², more preferably at least 1 m². The operator entrance platform may be sized so as to be sufficiently large to enter the operator platform, preferably including space for operating the door. The operator platform may be sized so as to be sufficiently large to safely perform the operations to be performed on the operator platform.

The operator platform can comprise a grid structure.

The operator entrance platform can comprise a grid structure. The grid structure of the operator platform and the grid structure of the operator entrance platform may be spaced apart from each other. Alternatively, one coherent grid structure can comprise the grid structure of the operator platform and the grid structure of the operator entrance platform. The grid structure of the operator platform and the grid structure of the operator entrance platform can merge smoothly into each other.

The grid structure of the operator platform and / or the grid structure of the operator entrance platform can be a metal grid. The grid structure of the operator platform and / or the grid structure of the operator entrance platform can have an anti-slip surface.

### Description of further embodiments

In the following, embodiments, by way of example, are described with reference to figures.
- Fig. 1: shows a graphical representation of the agricultural sprayer with the ladder being in the use position.
- Fig. 2: shows a graphical representation of the agricultural sprayer with the ladder being in the transport position.
- Fig. 3: shows a graphical representation of the door being in the closed position and comprised by the railing.
- Fig. 4: shows a graphical representation of the pivoting mechanism with the self-closing mechanism of the door.
- Fig. 5: shows a graphical representation of the pivoting mechanism of the door with the first and second stop mechanism.
- Fig. 6: shows a graphical representation of a sectional view of the pivoting mechanism of the door with the self-closing mechanism as well as the first and second stop mechanism.

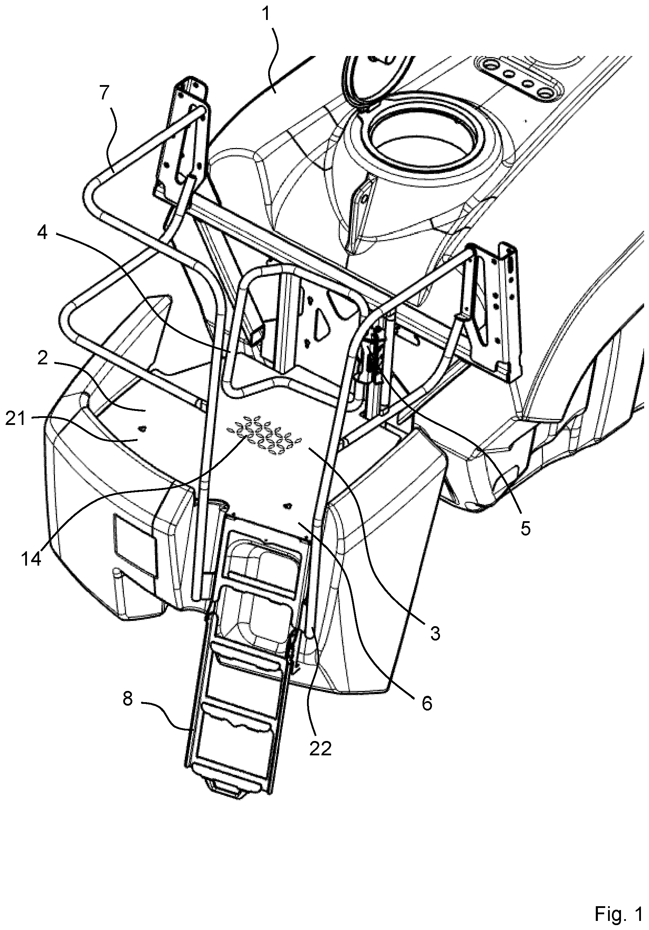

Figure 1 shows a graphical representation of the agricultural sprayer 1 with the ladder 8 being in the use position.

According to Figure 1, the agricultural sprayer 1 comprises an operator platform 2 for an operator to stand on, an entrance 3 through which the operator can enter the operator platform 2, and a self-closing door 4, which is pivotable between a closed position and an open position. In the closed position, which is shown in Figure 1, the door 4 closes the entrance 3 to the operator platform 2. In the open position, which is not shown in Figure 1, the operator can enter the operator platform 2 through the entrance 3. The door 4 comprises a self-closing mechanism 5, which is configured to, when the door 4 is in the open position, automatically return the door 4 into the closed position when released.

The agricultural sprayer according to Figure 1 further comprises an operator entrance platform 6 for an operator to stand on, which operator entrance platform 6 is arranged adjacent to the operator platform 2, wherein the operator platform 2 and the operator entrance platform are separated by the door 4. The operator platform 2 has at least twice the area of the operator entrance platform 6. The one-piece platform 21 consists of the operator platform 2 and the operator entrance platform 6. The operator platform 2 comprises a grid structure 14. Further, the agricultural sprayer comprises a railing 7, which surrounds the operator platform 2 from three sides. The door 4 is accommodated by the railing 7 and provides a passageway through the railing 7.

According to Figure 1, the operator entrance platform 6 comprises a rear side that is free of a railing. The other sides of the operator entrance platform 6 are bordered by the railing 7. A main part of the railing 7 assigned to the operator entrance platform 6 is formed by the door 4.

The agricultural sprayer 1 in Figure 1 further comprises a ladder 8 for reaching the operator entrance platform 6. The operator platform 2 can also be reached by the ladder 8 via the operator entrance platform 6. The ladder 8 is in the use position in Figure 1. Thus, the ladder 8 is unfolded, and the user can reach the operator entrance platform 6. Lower parts of the railing 7 form handles 22 that the operator can use when climbing the ladder 8.

In Figure 1, the door 4 is free of a locking mechanism. The distal part of the door 9 is freestanding. In particular, the distal part of the door 9 is not contacting the railing 7 or other external parts.

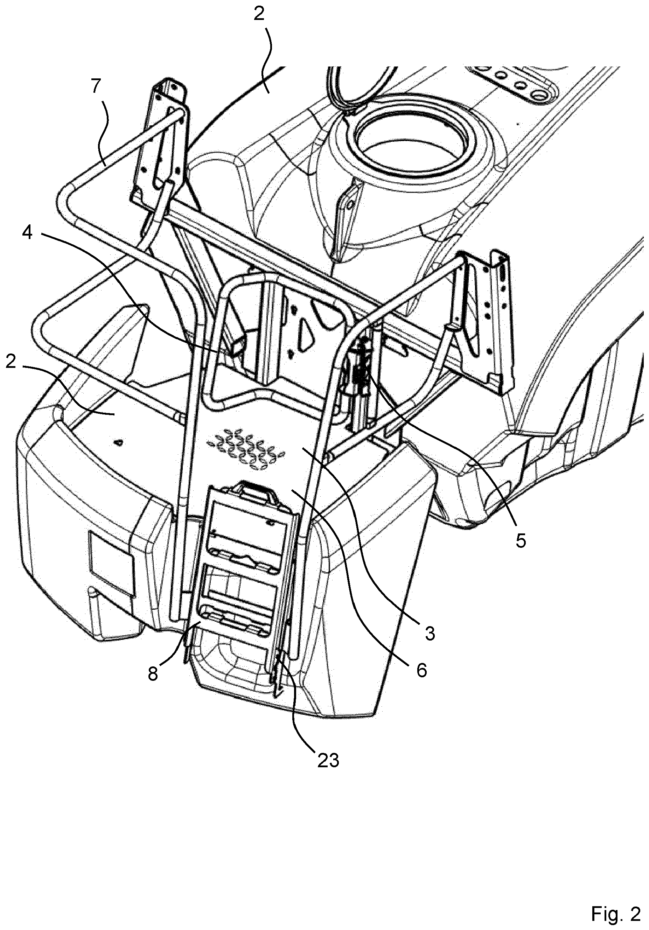

Figure 2 shows a graphical representation of the agricultural sprayer 1 with the ladder 8 being in the transport position.

Figure 2 shows essentially the same as Figure 1. However, in Figure 2, the ladder 8 is not in the use position but in the transport position. Thus, the operator can neither reach the operator platform 2 nor the operator entrance platform 8. However, the ladder 8 is provided with more ground clearance such that, during the transport of the ladder 8, the probability is reduced that the ladder 8 gets stuck.

According to Figure 2, the ladder 8 is foldable. The lower part (half) of the ladder 8 is folded onto the upper part (half) of the ladder 8 around a pivot axis 23 of the ladder 8. In the folded / transport position, the ladder 8 borders the rear side of the operator entrance platform 6. The rear side of the operator entrance platform 6 can be seen as the second side of the operator entrance platform 6.

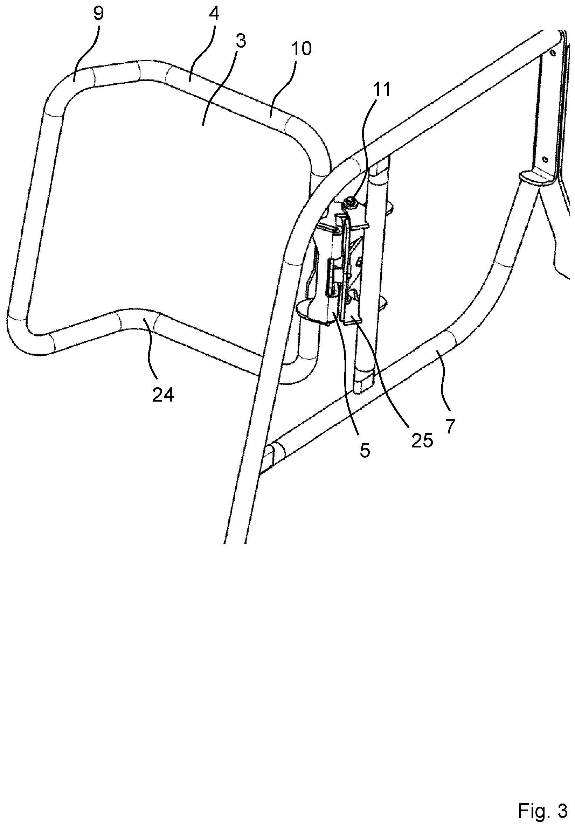

Figure 3 shows a graphical representation of the door 4 being in the closed position and comprised by the railing 7. The door 4 comprises a distal part 9 and a proximal part 10 with respect to a pivot axis 11. The distal part 9 is angled with respect to the proximal part 10. The distal part 9 is a U-shaped part. The U-shape is formed by pipes, e.g., the same type of pipes that are comprised by the railing 7. The distal part 9 is angled with respect to the proximal part 10 along a kink axis 24. The kink axis 4 is parallel to the pivot axis 11 of the door 4. The angle between the distal part 9 and the proximal part 10 is approximately 85 degrees. The proximal part 10 comprises a U-shaped part and the pivoting mechanism 25. The U-shaped part of the proximal part 10 is formed by pipes, e.g., the same type of pipes that are comprised by the railing 7. The U-shaped part of the distal part 9 and the U-shaped part of the proximal part 10 form an O-shaped part. The O-shaped part is formed in one piece. In a top view, the door 4 is L-shaped.

The pivoting mechanism 25 allows the door to be pivotable about the pivot axis 11. The pivoting mechanism 25 comprises a hinge. The pivoting mechanism 25 is attached to the railing 7.

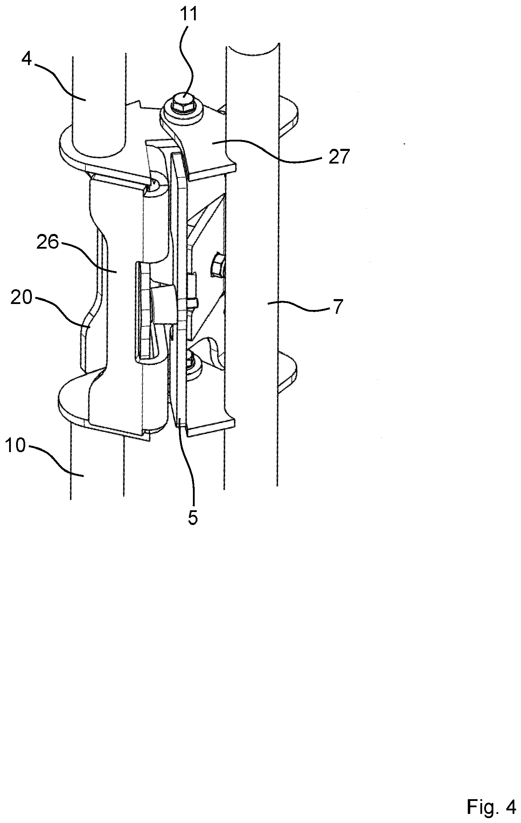

Figure 4 shows a graphical representation of the pivoting mechanism 20 with the self-closing mechanism 5 of the door 4. The pipe element of the door 4 comprises an interruption. In the interruption, the pivoting mechanism 20 with the self-closing mechanism 5 is accommodated. The pivoting mechanism 20 comprises a pivotable part 26 and a stationary part 27. The pivotable part 26 of the pivoting mechanism 20 is attached to the door 4, in particular, accommodated in the interruption of the door 4. The stationary part 27 part of the pivoting mechanism 20 is attached to the railing 7.

The pivotable part 26 of the pivoting mechanism 20 and the stationary part 27 part of the pivoting mechanism 20 can be in communication / connection with each other via a rotary axis. The rotary axis is the pivot axis 11 of the door 4. The pivotable part 26 of the pivoting mechanism 20, the stationary part 27 part of the pivoting mechanism 20, and the rotary axis can form the hinge.

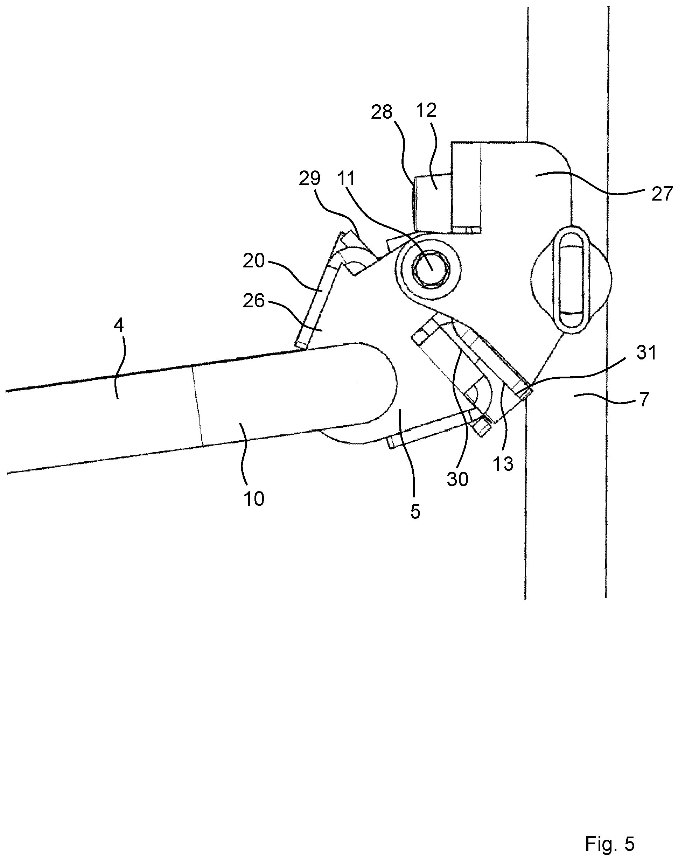

Figure 5 shows a graphical representation of the pivoting mechanism 20 of the door 4 with the first stop mechanism 12 and second stop mechanism 13 in a top view. In Figure 5, the door 4 is in the closed position. The door 4 comprises a first stop mechanism 12 that limits the pivoting of the door 4 in the opening direction, and a second stop mechanism 13 that limits the pivoting of the door 4 in the closing direction.

Since the door 4 is not to be pivoted further than into the closed position in the closing direction, the second stop mechanism 13 in Figure 5 fulfills its intended function. An abutting of the pivotable part 26 of the pivoting mechanism 20 against the stationary part 27 part of the pivoting mechanism 20 prevents the door 4 from pivoting further than into the closed position in the closing direction. Specifically, a first part 30 of the pivotable part 26 of the pivoting mechanism 20 abuts against a first part 31 of the stationary part 27 of the pivoting mechanism 20 such that the door 4 is prevented from pivoting further than into the closed position in the closing direction. The first part 30 of the pivotable part 26 of the pivoting mechanism 20 and the first part 31 of the stationary part 27 of the pivoting mechanism 20 are inelastic parts, e.g., metal parts. The second stop mechanism 13 of Figure 5 is thus a hard stop mechanism.

For preventing the door 4 from pivoting further than into the maximum open position in the opening direction, the first stop mechanism 12 is provided. In the maximum open position (maximum opening angle is present), an abutting of the pivotable part 26 of the pivoting mechanism 20 against the stationary part 27 part of the pivoting mechanism 20 prevents the door 4 from pivoting further than into the maximum open position in the opening direction. Specifically, a second part 29 of the pivotable part 26 of the pivoting mechanism 20 abuts against a second part 28 of the stationary part 27 of the pivoting mechanism 20 such that the door 4 is prevented from pivoting further than into the maximum open position in the opening direction. At least on of the second part 29 of the pivotable part 26 of the pivoting mechanism 20 and the second part 28 of the stationary part 27 of the pivoting mechanism 20 is elastic, e.g., a rubber part. In Figure 5, the second part 28 of the stationary part 27 of the pivoting mechanism 20 is elastic (e.g., rubber) and the second part 29 of the pivotable part 26 of the pivoting mechanism 20 is inelastic (e.g., metal). The first stop mechanism 13 of Figure 5 is thus a soft stop mechanism.

With the hard stop mechanism, the abutting of the inelastic parts causes a further pivoting of the door 4 in the corresponding direction to be abruptly stopped. With the soft stop mechanism, the abutting of at least one elastic part with the other part causes a further pivoting of the door 4 in the corresponding direction to be smoothly stopped. If the door 4 is moved against the hard stop mechanism, an elastic collision between the abutting / colliding parts 30, 31 may occur. If the door 4 is moved against the soft stop mechanism, an inelastic collision between the abutting / colliding parts 28, 29 may occur.

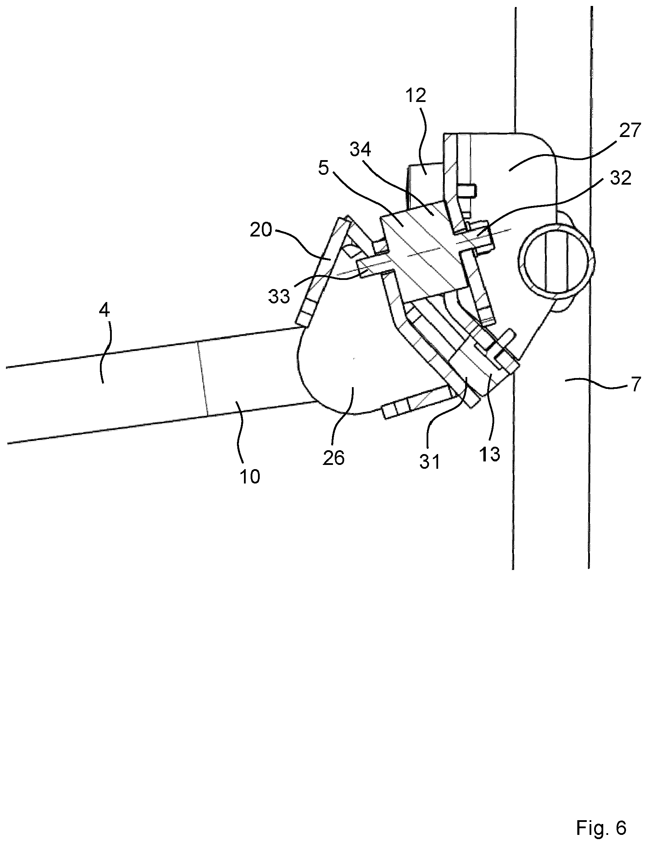

Figure 6 shows a graphical representation of a sectional view of the pivoting mechanism 20 of the door 4 with the self-closing mechanism 5 as well as the first stop mechanism 12 and second stop mechanism 13. It is noted that, according to Figure 6, also the second stop mechanism 13 is a soft stop mechanism. In fact, the first part 31 of the stationary part 27 of the pivoting mechanism 20 is an elastic part, e.g., a rubber part.

In the sectional view of the pivoting mechanism 20, the self-closing mechanism 5 is visible. The self-closing mechanism 5 of Figure 6 is a passive self-closing mechanism. Thus, the self-closing mechanism 5 is adapted for storing energy when the door 4 is pivoted into the open position and for releasing the energy stored in the self-closing mechanism 5 when the door 4 is released so as to automatically return the door 4 into the closed position. In Figure 6, the self-closing mechanism 5 is a rubber compression spring 34. The rubber spring 34 comprises a central body, which can be cylindrical, and a first connecting pin 32 arranged on a first end of the rubber spring 34 and a second connecting pin 33 arranged on a second end of the rubber spring. In alternative embodiments, the rubber spring may be cylindrical an hourglass shape. Alternatively or additionally, instead of or in addition to the first and second connecting pin already provided on the rubber spring, internal threads may be provided. In such case, additional elements, for example bolts, are necessary to form connecting elements. The self-closing mechanism 5 is arranged between the pivotable part 26 of the pivoting mechanism 20 and the stationary part 27 of the pivoting mechanism 20 such that, when the door 4 is pivoted in the opening direction, the self-closing mechanism 5 gets loaded. Specifically, the rubber spring 34 is arranged between the pivotable part 26 of the pivoting mechanism 20 and the stationary part 27 of the pivoting mechanism 20 such that, when the door 4 is pivoted in the opening direction, the rubber compression spring 34 gets loaded, i.e., compressed. Via the first connecting pin 32, the rubber spring 34 is connected to the stationary part 27 of the pivoting mechanism 20, and via the second connecting pin 33, the rubber spring 34 is connected to the pivotable part 26 of the pivoting mechanism 20.

When the rubber spring 34 is compressed / loaded, it pushes the pivotable part 26 of the pivoting mechanism 20 and the stationary part 27 of the pivoting mechanism 20 apart, offset from the pivot axis 11 and, for example, perpendicular to the pivot axis 11, in such a way that it applies a closing torque to the door 4 that would return the door 1 towards the closed position when released.

In the closed position of the door 4, the rubber spring 34 is preloaded. Alternatively, the rubber spring 34 is relaxed in the closed position of the door 4. The preloaded rubber spring 34 applies a closing torque to the door 4 for keeping the door 4 in the closed position.

The features disclosed in this specification, the figures and / or the claims may be material for the realization of various embodiments, taken in isolation or in various combinations thereof.

## Claims

1. An agricultural sprayer (1) comprising:
- an operator platform (2) for an operator to stand on;
- an entrance (3) through which the operator can enter the operator platform (2); and
- a self-closing door (4), which is pivotable between a closed position and an open position, wherein:
- in the closed position, the door (4) closes the entrance (3) to the operator platform (2);
- in the open position, the operator can enter the operator platform (2) through the entrance (3); and
- the door (4) comprises a self-closing mechanism (5), which is configured to, when the door (4) is in the open position, automatically return the door (4) into the closed position when released.

2. The agricultural sprayer (1) according to claim 1, wherein the self-closing mechanism (5) is adapted for storing energy when the door (4) is pivoted into the open position and for releasing the energy stored in the self-closing mechanism (5) when the door (4) is released so as to automatically return the door (4) into the closed position.

3. The agricultural sprayer according to claim 1 or 2, further comprising an operator entrance platform (6) for an operator to stand on, which operator entrance platform (6) is arranged adjacent to the operator platform (2), wherein the operator platform (2) and the operator entrance platform (6) are separated by the door (4).

4. The agricultural sprayer (1) according to one of the preceding claims, wherein:
- the agricultural sprayer (1) comprises a railing (7), wherein the railing (7) at least partially surrounds the operator platform (2); and
- the railing (7) comprises the door (4) such that a passageway through the railing (7) is provided.

5. The agricultural sprayer (1) according to claim 3, wherein the operator entrance platform (6) is at least partially free of a railing.

6. The agricultural sprayer (1) according to one of the preceding claims, further comprising a ladder (8) for reaching the operator platform (2).

7. The agricultural sprayer (1) according to claim 6, wherein the ladder (8) is movable between a use position and a transport position, wherein, in the use position, the operator can reach the operator platform (2) via the ladder (8).

8. The agricultural sprayer (1) according to claims 5 and 7, wherein the ladder (8), in the transport position, forms a boundary on the side of the operator entrance platform (6) that is free of a railing.

9. The agricultural sprayer (1) according to one of the preceding claims, wherein the door (4) comprises a distal part (9) and a proximal part (10) with respect to a pivot axis (11), the pivot axis (11) being the axis about which the door (4) is pivotable, wherein the distal part (9) is angled with respect to the proximal part (10).

10. The agricultural sprayer (1) according to one of the preceding claims, wherein the door (4) comprises:
- a first stop mechanism (12) that limits the pivoting of the door (4) in the opening direction; and / or
- a second stop mechanism (13) that limits the pivoting of the door (4) in the closing direction.

11. The agricultural sprayer (1) according to one of the preceding claims, wherein the door (4) is free of a locking mechanism.

12. The agricultural sprayer (1) according to one of the preceding claims, wherein a distal part (9) of the door (4) is freestanding in the closed position and / or in the open position.

13. The agricultural sprayer (1) according to one of the preceding claims, wherein the door (4) opens towards the operator platform (2).

14. The agricultural sprayer (1) according to claim 3, wherein the operator platform (2) has at least twice the area of the operator entrance platform (6).

15. The agricultural sprayer (1) according to one of the preceding claims, wherein the operator platform (2) comprises a grid structure (14).
